# FASCICULE DE BREVET EUROPEEN

(11) **EP 3 526 965 B1**
(45) Date de publication et mention de la délivrance du brevet: **04.11.2020**
(21) Numéro de dépôt: 17786989.8
(22) Date de dépôt: 10.10.2017
(51) Int. Cl.: H04N 9/31, G03B 21/26, G03B 21/60

(54) **SYSTÈME DE FORMATION D'UNE IMAGE FLOTTANTE**
SYSTEM ZUR HERSTELLUNG EINER SCHWEBENDEN BILDES
SYSTEM FOR FORMING A FLOATING IMAGE

(30) Priorité: 13.10.2016 FR 1659887
(43) Date de publication de la demande: 21.08.2019
(73) Titulaire: Commissariat à l'Energie Atomique et aux Energies Alternatives, 75015 Paris (FR)
(72) Inventeur: MARTINEZ, Christophe, 38100 Grenoble (FR)
(74) Mandataire: INNOV-GROUP
(86) Numéro de dépôt international: PCT/FR2017/052769
(87) Numéro de publication internationale: WO 2018/069625

(56) Documents cités:
- WO-A1-2015/158999
- WO-A2-2015/162235
- US-A- 3 551 043
- US-A1- 2009 009 862

## Description

### DOMAINE TECHNIQUE

Le domaine de l'invention est celui des systèmes de formation d'une image dite flottante, c'est-à-dire d'une image apparaissant en superposition d'une scène.

### ÉTAT DE LA TECHNIQUE ANTÉRIEURE

Des systèmes de formation d'image flottante existent dans le domaine du divertissement depuis le XIXe siècle et sont actuellement développés pour venir adresser notamment le domaine de la publicité et de la communication événementielle. Ils reposent sur un effet d'illusion optique, dit du fantôme de Pepper, dont le principe est rappelé en référence à la figure 1A qui illustre un système de formation d'image flottante décrit dans le document US2009/0009862.

Dans cet exemple, le système A1 comporte une source d'image A2, par exemple un écran émissif, adaptée à fournir ici une pluralité d'images sources au niveau de sa face d'émission A3, et une structure semi-réfléchissante A4 en forme de pyramide à base polygonale positionnée de manière inversée vis-à-vis de la source d'image A2, c'est-à-dire que son apex A est situé en regard de la face émissive A3 de la source d'image A2. Ainsi, les faces semi-réfléchissantes A5 de la pyramide A4 sont orientées vers la source d'image A2 et vers l'environnement du système A1.

La source d'image A2 fournit une pluralité d'images sources positionnées chacune en regard d'une face semi-réfléchissante A5 de la pyramide A4. Ainsi, les faisceaux lumineux de chaque image fournie sont réfléchis en partie par la face A5 correspondante de la pyramide A4 en direction de l'environnement. Un observateur placé devant l'une des faces A5 de la pyramide A4 voit alors une image virtuelle de l'image fournie par la source d'image A2, cette image virtuelle étant positionnée dans un plan virtuel situé à l'intérieur de la pyramide A4. La semi-transparence de la structure pyramidale A4 permet de former une image en superposition de la scène, ce qui procure à l'observateur l'impression d'observer une image flottante. Par ailleurs, dans cet exemple, un observateur qui tournerait autour du système A1 verrait différentes images virtuelles situées à l'intérieur de la pyramide A4, ce qui donnerait l'impression d'observer une image flottante tridimensionnelle.

Un inconvénient de ce type de système A1 est que la structure semi-réfléchissante A4 est nécessairement orientée de sorte que les faces semi-réfléchissantes A5 soient orientées vers la source d'image A2 et vers l'environnement du système A1. Il en résulte que le champ de vision est limité par la face d'émission A3 de la source d'image A2 d'une part et par la base de la structure semi-réfléchissante A4 d'autre part. De plus, l'orientation inversée de la pyramide A4 vis-à-vis de la source d'image A2 nécessite de prévoir des éléments de maintien de la pyramide A4, ce qui ajoute un effet inesthétique au système et réduit le confort de vision de l'observateur.

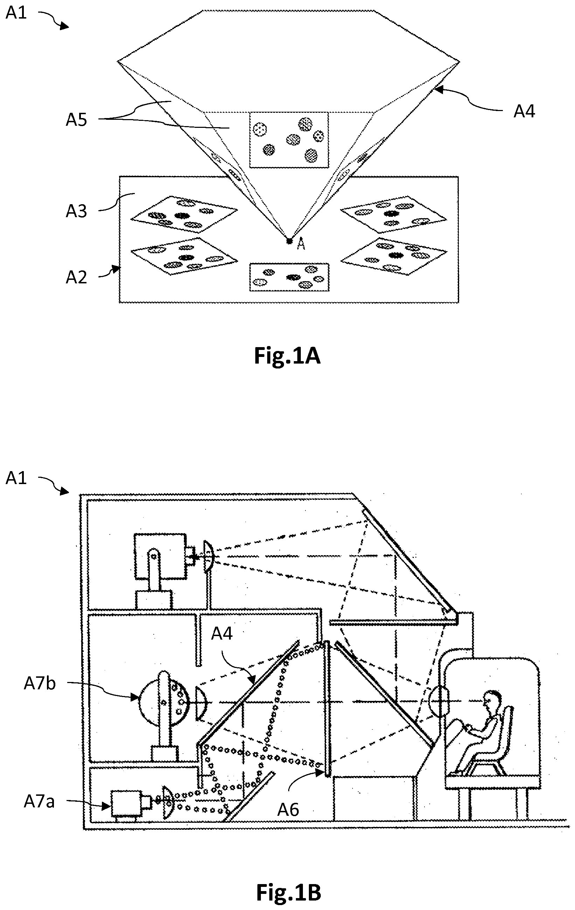

Le document US3551043 décrit un système A1 de projection d'images sur un écran d'affichage A6 translucide. Comme l'illustre la figure 1B, le système A1 comporte un premier projecteur A7a et un deuxième projecteur A7b, adaptés à projeter chacun une image source sur un même écran d'affichage. Les projecteurs A7a, A7b comportent une source d'image et un système optique de projection. Une structure semi-réfléchissante A4 est positionnée sur le chemin optique allant du premier projecteur A7a à l'écran d'affichage A6, et sur le chemin optique allant du deuxième projecteur A7b à l'écran d'affichage A6. Elle permet de réfléchir les faisceaux lumineux provenant du premier projecteur A7a en direction de l'écran A6, et de transmettre les faisceaux lumineux provenant du deuxième projecteur A7b en direction de l'écran A6. Ainsi, en fonctionnement, le système A1 de formation d'image assure l'affichage sur l'écran A6 de l'image fournie par le premier projecteur A7a, en superposition de l'image fournie par le deuxième projecteur A7b. Un observateur positionné du côté opposé de l'écran d'affichage A6 est alors en mesure de visualiser les deux images affichées, l'une étant superposée à l'autre.

Un inconvénient de ce système A1 est notamment que l'écran d'affichage A6 est translucide et non pas transparent, ceci pour éviter que l'observateur ne puisse visualiser nettement le deuxième projecteur A7b situé derrière l'écran A6. Ainsi, ce système A1 n'assure pas la formation d'une image flottante, c'est-à-dire d'une image observable en superposition d'une scène située derrière l'écran d'affichage.

Le document WO2015162235 décrit un système de formation d'une image flottante comportant un projecteur d'image, une écran d'affichage comportant une face interne adaptée à afficher l'image projetée par le projecteur d'image, et une structure semi-réfléchissante disposée entre le projecteur d'image et l'écran d'affichage, la structure semi-réfléchissante comportant une face adaptée à transmettre des faisceaux lumineux provenant du projecteur d'image et des faisceaux lumineux provenant d'une scène à observer.

### EXPOSÉ DE L'INVENTION

L'invention a pour objectif de remédier au moins en partie aux inconvénients de l'art antérieur, et plus particulièrement de proposer un système de formation d'image flottante, qui assure un confort de vision à l'observateur de l'image flottante, tout en améliorant l'expérience visuelle d'observation d'une image flottant en superposition de la scène. Pour cela, l'objet de l'invention est un système de formation d'une image flottante, comportant au moins un projecteur d'image, adapté à projeter une image source, et un écran d'affichage adapté à afficher l'image projetée par le projecteur d'image.

Selon l'invention, ledit écran d'affichage comporte des portions transparentes et des portions diffusantes, étant adapté, en outre, à transmettre partiellement des faisceaux lumineux incidents. Les portions transparentes sont adaptées à transmettre des faisceaux lumineux incidents sur la face interne provenant d'une scène à observer, et les portions diffusantes sont adaptées à diffuser des faisceaux lumineux incidents sur la face interne provenant du projecteur d'image et ainsi afficher l'image projetée. Et le système de formation d'image flottante comporte en outre une structure semi-réfléchissante disposée entre le projecteur d'image et l'écran d'affichage, comportant une face dite de transmission adaptée à transmettre des faisceaux lumineux provenant du projecteur d'image et des faisceaux lumineux provenant d'une scène à observer, et une face opposée dite de réflexion adaptée à réfléchir des faisceaux lumineux provenant de l'écran d'affichage, de manière à former une image virtuelle, dite flottante, de l'image projetée sur l'écran d'affichage, ladite image flottante étant observable au travers de l'écran d'affichage au moyen de la structure semi-réfléchissante.

Certains aspects préférés mais non limitatifs de ce système de formation d'image flottante sont les suivants.

Les portions diffusantes dudit écran d'affichage peuvent être en outre réfléchissantes de sorte que les faisceaux lumineux provenant de la structure semi-réfléchissante et diffusés par les portions diffusantes sont réfléchis en direction de la structure semi-réfléchissante.

Les portions diffusantes dudit écran d'affichage peuvent être en outre rétro-réfléchissantes de sorte que les faisceaux lumineux provenant de la structure semi-réfléchissante avec un axe d'incidence vis-à-vis des portions diffusantes sont réfléchis par les portions diffusantes en direction de la structure semi-réfléchissante avec un axe de réflexion identique à l'axe d'incidence.

L'écran d'affichage peut comporter une pluralité de faces d'affichage sensiblement planes et distinctes deux à deux, et la structure semi-réfléchissante peut comporter également une pluralité de faces sensiblement planes et inclinées deux à deux, chacune étant optiquement associée à une face d'affichage.

Lesdites faces d'affichage et lesdites faces de la structure semi-réfléchissante peuvent s'étendre continûment autour d'un axe dit de référence passant par une structure de renvoi dudit projecteur, l'écran d'affichage et la structure semi-réfléchissante formant chacun un cône pyramidal.

Le projecteur peut être adapté à fournir une pluralité d'images sources, et peut comporter au moins un système optique de projection adapté à conjuguer optiquement une image source à une face différente de l'écran d'affichage.

Le projecteur peut comporter une structure de renvoi présentant une pluralité de faces réfléchissantes, chacune desdites faces réfléchissantes de renvoi étant optiquement associée à une image source et à une face d'affichage.

Le projecteur peut comporter une structure de renvoi présentant une face réfléchissante mobile en rotation autour d'un axe de référence de manière à projeter une image source sur lesdites faces de l'écran d'affichage.

Les portions diffusantes desdites faces d'affichage peuvent être :
- rétro-réfléchissantes de sorte que les faisceaux lumineux provenant de la structure semi-réfléchissante avec un axe d'incidence vis-à-vis des portions diffusantes sont réfléchis par les portions diffusantes en direction de la structure semi-réfléchissante avec un axe de réflexion identique à l'axe d'incidence, et
- adaptées à diffuser les faisceaux lumineux rétro-réfléchis dans un cône de diffusion, chaque cône de diffusion associé à une face d'affichage étant partiellement recouvrant du cône de diffusion associé à une face d'affichage adjacente.

L'écran d'affichage et la structure semi-réfléchissante peuvent comporter chacun une unique face sensiblement courbe.

Lesdites faces courbes de l'écran d'affichage et de la structure semi-réfléchissante peuvent s'étendre continûment autour d'un axe de référence passant par une structure de renvoi dudit projecteur, l'écran d'affichage et la structure semi-réfléchissante formant chacun un cône de révolution vis-à-vis dudit axe de référence.

L'image fournie par la source d'image peut être une image anamorphosée.

Les portions transparentes de l'écran d'affichage peuvent être adaptées à transmettre des faisceaux lumineux provenant de la structure semi-réfléchissante, et les portions diffusantes peuvent être adaptées à diffuser des faisceaux lumineux provenant de la structure semi-réfléchissante en direction de ladite structure semi-réfléchissante.

Chaque portion diffusante peut être entourée d'une portion transparente, et l'écran d'affichage peut présenter un taux d'occultation par les portions diffusantes inférieur ou égal à 20%.

Le projecteur d'image peut comporter au moins une structure de renvoi adaptée à réfléchir au moins partiellement les faisceaux lumineux provenant d'une source d'image en direction de l'écran d'affichage, ladite structure semi-réfléchissante étant disposée entre l'écran d'affichage et la structure de renvoi. La structure de renvoi peut être disposée en regard de la face interne de l'écran. La face de transmission de la structure semi-réfléchissante peut être orientée vers la structure de renvoi, et la face de réflexion être orientée vers la face interne de l'écran.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
les figures 1A et 1B, déjà décrites, illustrent deux exemples d'un système de formation d'image, flottante (fig.1A) et non flottante (fig.1B), selon l'art antérieur ;
la figure 2 illustre, de manière partielle et schématique, un système de formation d'image selon un mode de réalisation ;
les figures 3A à 3D sont des vues en coupe, partielles et schématiques, de différents exemples d'un écran d'affichage à portions transparentes et portions diffusantes ;
les figures 4A à 4D sont des vues en coupe, partielles et schématiques, de différents exemples d'un écran d'affichage à portions transparentes et portions diffusantes et réfléchissantes ;
les figures 5A à 5C sont des vues en coupe, partielles et schématiques, de différents exemples d'un écran d'affichage à portions transparentes et portions diffusantes et rétro-réfléchissantes ;
les figures 6A et 6B illustrent, de manière partielle et schématique, en coupe (fig.6A) et en perspective (6B), un système de formation d'image selon un autre mode de réalisation, dans lequel le projecteur comporte un miroir de renvoi ;
les figures 7A, 7B et 7C illustrent, de manière partielle et schématique, différents exemples d'un système de formation d'image selon un autre mode de réalisation, permettant de former une image flottante quasi-tridimensionnelle ;
les figures 8A et 8B illustrent, de manière partielle et schématique, un système de formation d'image selon un autre mode de réalisation, dont l'écran d'affichage et la structure semi-réfléchissante sont courbes et coaxiaux ; et la figure 8C illustre, de manière partielle et schématique, un système de formation d'image selon une variante dans laquelle le projecteur est un dispositif de projection à balayage.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

D'une manière générale, le système de formation d'image flottante comporte un projecteur d'au moins une image source, adapté à assurer la projection de l'image source sur un écran d'affichage. Il comporte en outre un écran d'affichage adapté à assurer l'affichage de l'image projetée et à permettre l'observation de la scène située derrière l'écran. Aussi, il comporte des portions transparentes et des portions diffusantes réparties sur tout ou partie de sa surface. De préférence, comme détaillé plus loin, les portions diffusantes sont également réfléchissantes, voire rétro-réfléchissantes. Le système comporte également une structure semi-réfléchissante de formation de l'image flottante, située entre le projecteur et l'écran d'affichage, et adaptée à former une image virtuelle, dite flottante, de l'image affichée par l'écran.

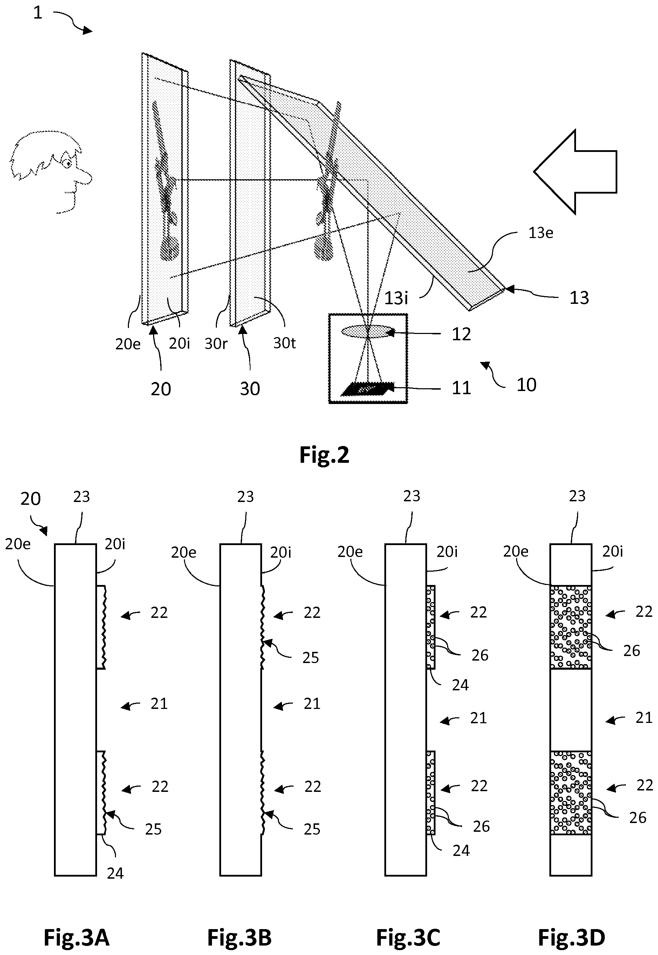

La figure 2 illustre schématiquement un système 1 de formation d'une image flottante selon un premier mode de réalisation, dans lequel le projecteur 10 comporte une lame semi-réfléchissante 13 de renvoi.

Le projecteur d'image 10 comprend au moins une source d'image 11 et un système optique de projection 12 associé, et, de préférence, une structure de renvoi 13. La source d'image 11, par exemple un écran émissif, est adaptée à fournir au moins une image à afficher, dite image source. Il peut s'agir, entre autres, d'un écran à cristaux liquides (écran LCD), d'un écran à diodes électroluminescentes (LED), éventuellement organiques (OLED), voire d'un écran cathodique. La source d'image 11 sera avantageusement constituée d'une matrice de micro miroirs type DMD (pour *Digital Micromirror Device,* en anglais) associée à une source lumineuse RVB.

Le système optique 12 de projection est adapté à projeter l'image fournie par la source d'image 11 sur l'écran d'affichage 20, c'est-à-dire à projeter sur l'écran 20 une image réelle de l'image fournie. En d'autres termes, le système optique 12 de projection assure la conjugaison optique de la face d'émission de la source d'image 11 et de l'écran d'affichage 20. Il peut ainsi comporter par exemple une ou plusieurs lentilles, et est disposé entre la source d'image 11 et l'écran d'affichage 20, et dans cet exemple entre la source d'image 11 et la structure de renvoi 13.

Le projecteur 10 comporte dans cet exemple une structure de renvoi 13 adaptée à réfléchir au moins partiellement, voire totalement, les faisceaux lumineux provenant de la source d'image 11 en direction de l'écran d'affichage 20. La structure de renvoi 13 est formée ici d'une lame semi-réfléchissante, disposée sur le chemin optique allant du projecteur 10 vers l'écran d'affichage 20, et ici entre l'écran d'affichage 20 et la scène à observer. La lame de renvoi 13 comporte une face dite interne 13i semi-réfléchissante tournée vers le projecteur 10 et l'écran d'affichage 20, et une face dite externe 13e, opposée à la face interne 13i. Elle peut être orientée, comme illustrée, de manière à former un angle d'inclinaison, par exemple 45°, avec l'écran d'affichage 20. La lame de renvoi 13 peut être remplacée par un filtre interférentiel réalisant la même fonction optique que la lame semi- réfléchissante, voire, comme il sera détaillé par la suite, par un miroir. Dans cet exemple, la structure de renvoi 13 présente, en association avec l'écran d'affichage 20, une forme de pyramide dont la base est située en regard du projecteur 10.

L'écran est un écran d'affichage 20 partiellement transparent, et comporte pour cela des portions transparentes 21 et des portions diffusantes 22 réparties sur tout ou partie de sa surface (cf. fig 3A et suivantes). Il comporte une face dite interne 20i destinée à recevoir les faisceaux lumineux provenant du projecteur 10, et une face opposée dite externe 20e, en regard de laquelle un observateur est positionné. L'écran d'affichage 20 est ainsi adapté à diffuser plus ou moins fortement, au niveau des portions diffusantes 22, une partie des faisceaux incidents sur sa face interne 20i, en particulier les faisceaux provenant du projecteur 10. Il est également adapté à transmettre, au niveau des portions transparentes 21, une autre partie des faisceaux incidents sur sa face interne 20i, en particulier les faisceaux provenant de la scène. Pour former une image réelle de l'image fournie par le projecteur 10, l'écran d'affichage 20 est disposé dans le plan image du système optique 12 de projection.

Les portions transparentes 21 et les portions diffusantes 22 sont distinctes les unes des autres, et sont de préférence agencées mutuellement de sorte qu'une portion diffusante 22 soit entourée, dans le plan de l'écran, par une portion transparente 21. Par transparent, on entend la propriété optique d'un élément, matériau, surface... qui laisse passer la lumière et à travers lequel on distingue clairement la scène située derrière l'élément en question. Une portion transparente 21 se distingue alors d'une portion translucide qui laisse passer la lumière mais en la diffusant de telle manière qu'on ne puisse distinguer clairement la scène au travers de celui-ci. Une portion transparente 21 ici présente des surfaces lisses, c'est-à-dire présentant une qualité dite « de poli optique » permettant la transmission des faisceaux lumineux sans modification significative de leurs caractéristiques de propagation. Une surface lisse présente de préférence une rugosité de surface inférieure à 20nm RMS (pour *Root Mean Square,* en anglais) correspondant à la racine carrée de la moyenne de l'amplitude des aspérités de la surface, et de préférence comprise entre 2nm et 15nm RMS. L'écran d'affichage 20, grâce à ses portions transparentes 21, se distingue alors des écrans translucides, tels que celui du document US3551043 cité précédemment qui transmet la lumière provenant de la scène mais en la diffusant de telle manière que les objets de la scène ne sont pas distinguables ou nettement visibles.

La structure semi-réfléchissante 30 est adaptée d'une part à transmettre les faisceaux se propageant en direction de l'écran d'affichage 20, en particulier les faisceaux provenant du projecteur 10 et les faisceaux provenant de la scène, et d'autre part à réfléchir les faisceaux provenant de l'écran d'affichage 20.

Elle présente une première face dite de transmission 30t, tournée vers la scène et ici orientée vers la structure de renvoi 13, et une deuxième face dite de réflexion 30r, opposée à la première face 30t, orientée vers l'écran d'affichage 20. Ainsi, les faisceaux incidents sur sa face de transmission 30t sont transmis partiellement et de préférence totalement, et les faisceaux incidents sur sa face de réflexion 30r sont réfléchis partiellement et de préférence totalement.

La structure semi-réfléchissante 30 est disposée sur le chemin optique allant du projecteur 10 à l'écran d'affichage 20, et entre la scène à observer et l'écran d'affichage 20. Elle est ici sensiblement parallèle à l'écran d'affichage 20 mais peut présenter un angle d'inclinaison non nul avec ce dernier. Elle est formée ici d'une unique lame semi-réfléchissante, mais peut être remplacée par un filtre interférentiel réalisant la même fonction optique que la lame semi- réfléchissante.

En fonctionnement, la source d'image 11 du projecteur 10 fournit une image dite source, qui est projetée par le système optique 12 sur l'écran d'affichage 20. Plus précisément, les faisceaux lumineux émis par la source d'image 11 sont projetés par le système optique 12, et réfléchis par la structure de renvoi 13 puis transmis par la structure semi-réfléchissante 30 en direction de l'écran d'affichage 20. L'écran étant placé dans le plan image du système optique 12 de projection, une image réelle de l'image source est alors formée sur l'écran d'affichage 20 par ses portions diffusantes 22. La structure semi-réfléchissante 30 forme alors une image virtuelle de l'image réelle affichée. Plus précisément, les faisceaux provenant de l'image réelle affichée sont réfléchis par la structure semi-réfléchissante 30 en direction de l'écran d'affichage 20, et transmis par ce dernier par ses portions transparentes 21. De plus, les faisceaux lumineux émis par la scène sont transmis par la structure de renvoi 13, la structure semi-réfléchissante 30 puis l'écran d'affichage 20, en direction d'un observateur placé en regard de la face externe 20e de l'écran d'affichage 20.

Ainsi, un tel observateur est en mesure d'apercevoir une image virtuelle, formée par la structure semi-réfléchissante 30, de l'image réelle projetée sur l'écran d'affichage 20. Ainsi, l'image virtuelle, n'ayant pas besoin d'être matérialisée sur une surface d'un écran d'affichage 20 pour être observable comme dans le document US3551043 cité précédemment, paraît véritablement flotter en superposition de la scène. Par ailleurs, à la différence des systèmes de formation d'image flottante comme celui du document US2009/0009862 cité précédemment, le système 1 de formation selon l'invention ne requiert pas l'utilisation d'une structure pyramidale semi-réfléchissante à orientation inversée, ce qui permet d'offrir aux observateurs un confort de vision amélioré. En effet, le champ de vision de l'observateur n'est pas limité ou gêné par la base de la structure en pyramide inversée, ni par des éléments de maintien mécanique de la pyramide inversée.

Les figures 3A à 3D illustrent des exemples d'écran d'affichage 20 selon un mode de réalisation, dans lequel l'écran comporte une plaque 23, ou un film ou une feuille, en au moins un matériau transparent, par exemple en verre ou en plastique, au niveau de laquelle sont situées des portions diffusantes 22 et des portions transparentes 21.

La figure 3A illustre un écran d'affichage 20 formé d'une plaque 23 en un même matériau transparent, dont une première face, partiellement revêtue de portions diffusantes 22, formant la face interne 20i de l'écran. Celles-ci sont formées d'une couche 24 dont une face présente des micro- ou nano- structurations 25 adaptées à diffuser la lumière incidente. Les structurations 25 peuvent être notamment obtenues par lithographie ou par moulage.

En variante, comme l'illustre la figure 3B, les structurations 25 peuvent être réalisées directement au niveau de la face interne 20i de la plaque 23 transparente, et non pas sur une couche déposée 24. Des structurations 25 peuvent, en variante ou en complément, être formées au niveau de la face opposée de la plaque 23 qui forme la face externe 20e de l'écran d'affichage 20.

En variante, comme l'illustre la figure 3C, l'écran d'affichage 20 peut être similaire à celui de la fig.3A et s'en distingue en ce que les portions diffusantes 22 sont formées par dépôt, par exemple par sérigraphie, d'une couche 24 réalisée en un matériau transparent chargé de particules diffusantes 26.

En variante, comme l'illustre la figure 3D, l'écran d'affichage 20 peut être formé d'une plaque 23 réalisée d'un seul tenant comportant des zones en un premier matériau transparent, formant ainsi les portions transparentes 21, et des zones dont un second matériau formé d'un liant transparent chargé de particules diffusantes 26, formant ainsi les portions diffusantes 22. Les zones à particules diffusantes 26 peuvent s'étendre sur tout ou partie de l'épaisseur de la plaque 23.

D'une manière générale, l'écran d'affichage 20 comporte également des portions transparentes 21, formées ici de zones de la plaque 23 transparente dont les faces externe et interne sont optiquement lisses, c'est-à-dire que la rugosité de surface est inférieure ou égale à 20nm RMS. Les portions transparentes 21 sont agencées de préférence de manière à entourer les portions diffusantes 22 partiellement voire totalement, dans le plan de l'écran.

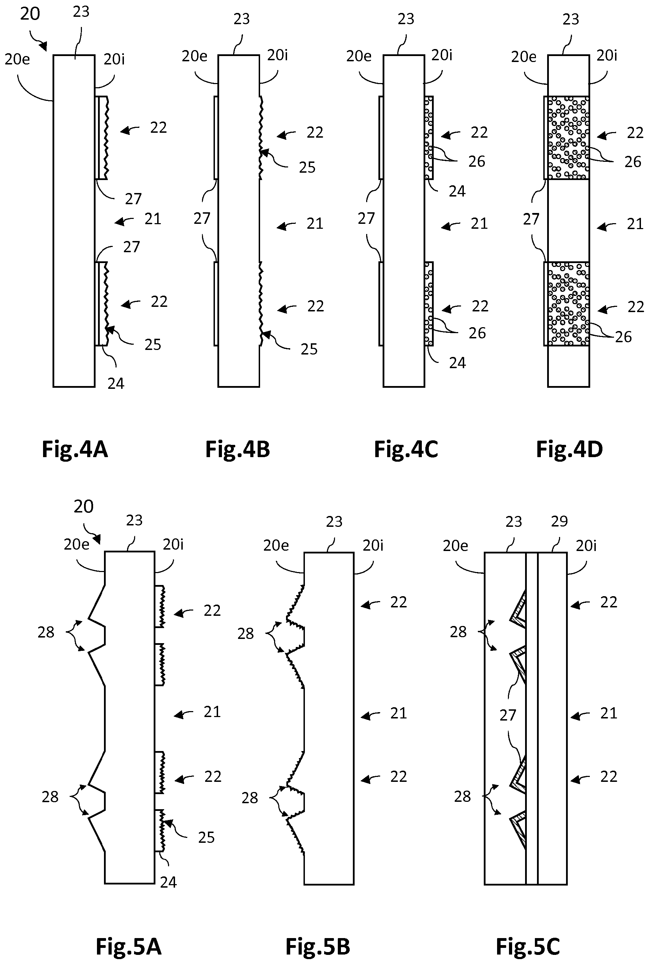

Les figures 4A à 4D illustrent des exemples d'un écran d'affichage 20 selon un autre mode de réalisation, dans lequel les portions diffusantes 22 sont en outre opaques, et de préférence réfléchissantes, de manière à limiter la transmission des faisceaux lumineux provenant de la structure semi-réfléchissante et diffusés par les portions diffusantes 22.

Pour cela, les portions diffusantes 22 comportent en outre une couche 27 en un matériau opaque, et de préférence réfléchissant, par exemple un matériau métallique tel que de l'aluminium ou de l'argent. La couche 27, ici réfléchissante, peut ainsi être une couche mince d'une épaisseur de quelques nanomètres à quelques microns, par exemple comprise entre 10nm et 10µm, de préférence comprise entre 30nm et 100nm.

Les couches minces réfléchissantes 27 sont situées au niveau des portions diffusantes 22 et non pas au niveau des portions transparentes 21. Chaque couche réfléchissante 27 peut être située au contact de la face interne 20i de la plaque 23 transparente, de manière à être recouverte par la couche structurée 24 (fig.4A). Elle peut en variante être située au contact de la face externe 20e, en regard de la couche structurée 24 (non représenté) ; en regard de la zone structurée 22 de la face interne 20i de la plaque 23 transparente (fig.4B) ; ou en regard de la couche 24 à particules diffusantes 26 (fig.4C). Elle peut également être au contact de la face externe 20e de la plaque 23, au niveau d'une zone diffusante 22 formée en le deuxième matériau comportant des particules diffusantes 26 (fig.4D).

D'une manière générale, un écran d'affichage 20 dont les portions diffusantes 22 sont également réfléchissantes permet de limiter la transmission des faisceaux lumineux de l'image réelle projetée vers l'observateur, et donc d'augmenter le flux lumineux en direction de la structure semi-réfléchissante 30. Ainsi, on augmente le rendement optique du système 1 de formation d'image flottante, dans la mesure où l'image flottante devient plus lumineuse. De plus, on limite la diffusion de l'image réelle projetée en direction de l'observateur. L'observation de l'image flottante au travers de l'écran d'affichage 20 est ainsi moins 'parasitée' par l'image réelle projetée, ce qui améliore le confort et la qualité de vision de l'image flottante au travers de ce même écran.

Les figures 5A à 5C illustrent des exemples d'un écran d'affichage 20 selon un autre mode de réalisation, dans lequel les portions diffusantes 22 sont en outre rétro-réfléchissantes. L'écran d'affichage 20 est similaire à celui des exemples des figures 3A-3D et 4A-4D et en diffère essentiellement en ce que les portions diffusantes 22 comportent au moins une structuration 28 en coin de cube de manière à assurer une rétro-réflexion des faisceaux incidents sur la face interne en direction de la structure semi-réfléchissante 30.

La figure 5A illustre un exemple dans lequel chaque portion diffusante 22 comporte, au niveau de la face externe 20e de l'écran d'affichage 20, une structuration 28 en coin de cube. Cette structuration 28 est en saillie vis-à-vis d'un plan de la face externe 20e de l'écran d'affichage 20, et forme une protubérance. Chaque structuration 28 est une protubérance en forme de coin de cube, les bases des protubérances étant ici sensiblement parallèles à la face externe 20e de l'écran d'affichage 20. Dans cet exemple, chaque portion diffusante 22 comporte une couche diffusante 24, ici structurée, située sur la face interne 20i de l'écran d'affichage 20 et positionnée en regard de la protubérance 28 en coin de cube, c'est-à-dire au droit du coin de cube 28 suivant l'épaisseur de la plaque 23 transparente. Pour assurer la propriété de transparence partielle de l'écran d'affichage 20, les coins de cube 28 ne sont pas adjacentes, mais sont séparées les unes des autres par les portions transparentes 21, formées de zones sensiblement planes et lisses.

La figure 5B illustre un exemple d'écran d'affichage 20 similaire à celui de la fig.5A, qui s'en distingue essentiellement en ce que la fonction de diffusion des portions diffusantes 22 est assurée, non pas par une couche diffusante déposée, mais par les imperfections de surface de la face externe 20e au niveau des protubérances en coin de cube 28. Ces imperfections de surface peuvent être obtenues, par exemple, par structuration mécanique de surface, lithographie ou moulage.

Par ailleurs, une couche métallique (non représentée) peut également être prévue au niveau de la face externe de l'écran, dans les portions diffusantes 22 et rétro-réfléchissantes, pour favoriser la réflexion de la lumière incidente. D'autres films diffuseurs réflectifs transparents peuvent être utilisés, par exemple des films holographiques dont un exemple est donné dans le document US6288805, voire des films diffuseurs réflectifs transparents du type de ceux commercialisés par la société Luminit sous le terme « *Light Shaping Diffuser ».*

La figure 5C illustre un autre exemple dans lequel chaque portion diffusante 22 comporte une structuration 28 en coin de cube sous la forme d'une échancrure dans une plaque 23 transparente. La surface de l'échancrure en coin de cube 28 est avantageusement revêtue d'une couche mince réflectrice 27, par exemple métallique, tel qu'une couche d'aluminium ou d'argent d'une épaisseur avantageusement comprise entre 20nm et 100nm. Les échancrures sont réalisées dans une première plaque 23, à laquelle est fixée une deuxième plaque 29 transparente, au moyen d'une couche de colle transparente. Des structurations 25 peuvent également être prévues en regard des coins de cube 28, sur la face 20i de l'écran 20, pour renforcer la diffusion des faisceaux lumineux.

La fonction de diffusion des faisceaux lumineux peut être assurée par la présence des structurations 25, comme décrit précédemment, ou, en variante, être assurée par les imperfections de surface formées par les bords des coins de cube 28.

En variante aux exemples d'écran d'affichage à portions diffusantes et rétro-réfléchissantes décrits précédemment, la fonction de rétro-réflexion peut être assurée, non pas par des structurations en coins de cube, mais par une couche d'un matériau à base de microbilles. Comme décrit dans le document WO2015/158999, une face de l'écran peut ainsi comporter des zones revêtues par la couche à base de microbilles, formant ainsi les portions 22 diffusantes rétro-réfléchissantes, et des zones non revêtues par cette couche, formant ainsi les portions 21 transparentes.

D'une manière générale, le taux d'occultation par les portions diffusantes 22, c'est-à-dire le rapport entre la surface cumulée des portions diffusantes 22 sur la surface totale de la face interne ou externe de l'écran d'affichage 20, est avantageusement inférieur ou égal à 50% et de préférence inférieur ou égal à 20%, de manière à permettre une bonne visualisation de la scène en transparence à travers l'écran d'affichage 20. D'autres valeurs sont possibles en fonction des applications.

Un tel écran d'affichage 20 dans lequel les portions diffusantes 22 sont en outre rétro-réfléchissantes permet d'augmenter encore le rendement optique du système 1 de formation d'image flottante. L'image flottante, observée au travers de l'écran d'affichage 20 et de la structure semi-réfléchissante 30, paraît alors plus lumineuse.

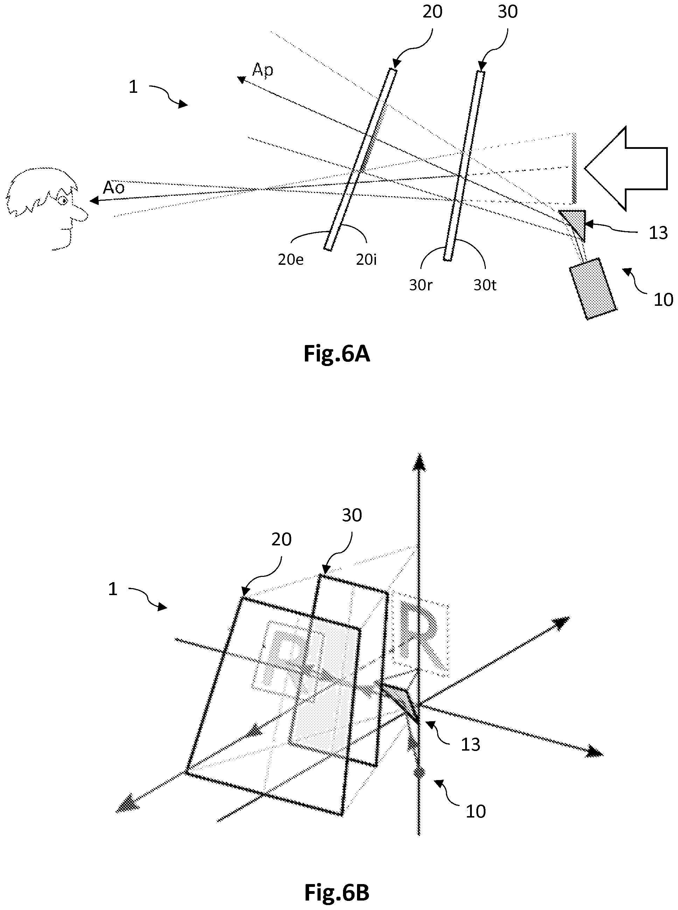

Les figures 6A et 6B sont des vues schématiques, en coupe (fig.6A) et en perspective (fig.6B), illustrant un système 1 de formation d'une image flottante selon un autre mode de réalisation, permettant d'obtenir un rendement lumineux élevé.

Ici, la structure de renvoi du projecteur 10 est un miroir qui assure la réflexion sensiblement totale des faisceaux lumineux émis par la source d'image 11 et transmis par le système optique 12 de projection. Aussi, le rendement lumineux du système 1 de formation d'image flottante est alors augmenté.

On note ici Ap l'axe optique de projection, correspondant à l'axe de propagation des faisceaux émis par le projecteur 10 et transmis par la structure semi-réfléchissante 30 puis par l'écran d'affichage 20. On note également Ao l'axe optique d'observation, correspondant à l'axe optique des faisceaux rétro-réfléchis suivant l'axe de projection Ap, puis réfléchis par la structure semi-réfléchissante 30 et enfin transmis par l'écran d'affichage 20. On définit l'angle Δθ comme étant l'écart entre l'axe de propagation Ap et l'axe d'observation Ao.

Les différents éléments du système 1 de formation d'image flottante sont de préférence agencés, c'est-à-dire positionnés et orientés mutuellement, de sorte que l'axe de projection Ap soit distinct de l'axe d'observation Ao. Ainsi, un observateur est en mesure d'observer l'image flottante en superposition de la scène, sans être gêné par les faisceaux lumineux provenant du projecteur 10 et directement transmis au travers des portions transparentes 21 de l'écran d'affichage 20. De préférence, l'écart angulaire Δθ entre l'axe de projection Ap et l'axe d'observation Ao est supérieur ou égal à 20°.

Par ailleurs, les différents éléments du système 1 de formation sont agencés mutuellement de sorte que l'image flottante est formée dans une zone distincte du projecteur 10, et notamment une zone distincte de la structure de renvoi 13. Autrement dit, les éléments du système 1 de formation sont positionnés et orientés les uns vis-à-vis des autres de sorte que l'image flottante n'est pas superposée à la structure de renvoi 13 du projecteur 10. L'image flottante est ainsi située à distance de la structure de renvoi 13.

D'une manière générale, le système 1 de formation d'image flottante comporte un boîtier (non représenté) à l'intérieur duquel sont situés la source d'image 11 et le système optique 12 de projection, et qui forme un socle sur lequel reposent l'écran d'affichage 20 et la structure semi-réfléchissante 30. Le boîtier comporte une ouverture au niveau de laquelle est située la structure de renvoi, permettant ainsi aux faisceaux lumineux émis par la source d'image 11 d'être réfléchis par la structure de renvoi 13 hors du boîtier, en direction de l'écran d'affichage 20.

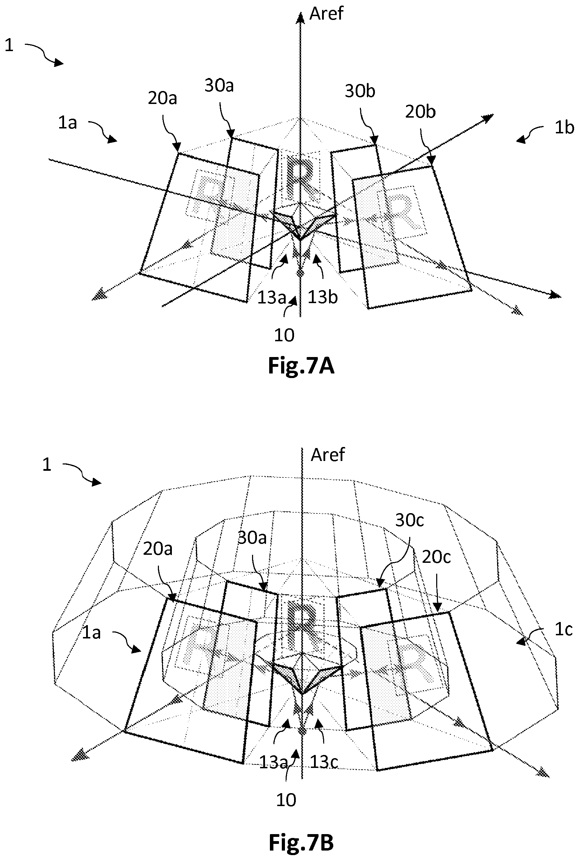

La figure 7A illustre un système 1 de formation d'image flottante selon un autre mode de réalisation, et la figure 7B illustre une variante du système 1 de formation permettant la formation d'une image flottante quasi-tridimensionnelle.

En référence à la figure 7A, le système 1 de formation d'image flottante comporte ici deux dispositifs 1a, 1b, dits élémentaires, de formation d'image flottante, chaque dispositif élémentaire étant similaire ou identique au système 1 de formation d'image flottante illustré sur la fig.6B.

Le système 1 de formation d'image comporte ainsi deux faces d'affichage 20a, 20b distinctes l'une de l'autre, associées chacune à une face semi-réfléchissante 30a, 30b et à un système optique de projection (non représenté). Les faces d'affichage 20a, 20b sont ici deux écrans d'affichage distincts. De même, les faces semi-réfléchissantes 30a, 30b sont des structures semi-réfléchissantes distinctes. Les faces d'affichage 20a, 20b et les faces semi-réfléchissantes 30a, 30b sont ici sensiblement planes. Les faces d'affichage 20a, 20b peuvent être au contact l'une de l'autre, ou comme illustré distantes l'une de l'autre.

Le projecteur 10 comporte ici deux images sources (non représentées), fournies par une même source d'image ou deux sources d'images distinctes, ainsi qu'au moins un, par exemple deux, systèmes optiques de projection (non représentés) qui conjuguent chaque image source fournie à la face d'affichage 20a, 20b différente. Il comporte en outre un prisme de renvoi 13 formé d'une pyramide inversée comportant deux faces réfléchissantes 13a, 13b orientées l'une et l'autre vers les faces d'affichage 20a, 20b correspondantes. Les images sources peuvent être identiques ou différentes l'une de l'autre. Le système 1 peut comporter un unique projecteur 10, voire une pluralité de projecteurs 10 distincts les uns des autres, chacun comprenant alors une seule source d'image.

En fonctionnement, chaque image source est projetée par le ou les systèmes optiques sur les faces d'affichage 20a, 20b, qui affichent chacune une image réelle de l'image source. Les images réelles affichées sont diffusées, et de préférence réfléchies voire rétro-réfléchies en direction des faces semi-réfléchissantes 30a, 30b, de sorte que des images virtuelles des images réelles projetées sont formées par les faces semi-réfléchissantes 30a, 30b. De préférence, les dispositifs élémentaires 1a, 1b de formation d'image flottante sont identiques l'une à l'autre et sont agencés mutuellement de manière à présenter une symétrie planaire suivant un plan passant par un axe vertical de référence Aref. Ainsi, chaque image virtuelle apparaît à une même distance des faces d'affichages 20a, 20b, de sorte qu'un observateur passant d'un écran d'affichage 20 à l'autre est en mesure l'apercevoir l'image flottante située à une même position.

La figure 7B illustre une variante d'un système 1 de formation d'image flottante, qui comporte ici une pluralité de dispositifs 1a, 1b, 1c... de formation d'image permettant de former une image flottante quasi-tridimensionnelle, dans le sens où un observateur sera en mesure d'observer l'image flottante quelle que soit sa position autour du système 1 de formation. De plus, lorsque les images sources montrent le même objet selon différents angles de vue, l'observateur pourra observer le même objet selon ces différents angles de vue, en fonction de sa position autour du système 1 de formation, ce qui renforce ainsi l'aspect tridimensionnel de l'image flottante.

Dans cet exemple, les faces d'affichage 20a, 20b, 20c... sont les faces d'un même écran d'affichage, commun aux différents dispositifs 1a, 1b... de formation, agencées les unes à la suite des autres de manière à s'étendre continûment autour d'un même axe de référence Aref. De la même manière, les faces semi-réfléchissantes 30a, 30b, 30c... sont les faces d'une même structure semi-réfléchissante, commune aux différents dispositifs de formation, agencées les unes à la suite des autres de manière à s'étendre continûment autour du même axe de référence Aref.

Dans cet exemple, les faces d'affichage 20a, 20b, 20c... et les faces semi-réfléchissantes 30a, 30b, 30c... forment des surfaces sensiblement planes. Elles présentent ici une symétrie axiale autour dudit axe de référence, suivant une périodicité correspondant à la largeur des faces.

Le projecteur 10 comporte une pluralité de sources d'image (non représentées) et une pluralité de systèmes optiques de projection (non représentés) qui conjuguent chacun la source d'image 11 à l'une ou l'autre des faces d'affichage 20a, 20b, 20c.... Il comporte en outre un prisme de renvoi 13 formé d'une pyramide inversée comportant autant de faces réfléchissantes 13a, 13b, 13c... que de sources d'image et de faces d'affichage 20a, 20b, 20c... Les sources d'image peuvent fournir des images sources identiques ou différentes l'une de l'autre.

Le fonctionnement est similaire à celui décrit en référence à la fig.7A, moyennant le fait qu'un observateur est en mesure d'observer l'image flottante, positionnée à une même distance des différentes faces d'affichage 20a, 20b, 20c..., quelle que soit sa position autour du système 1 de formation d'image flottante. Cet effet optique renforce l'impression d'observer une image flottante tridimensionnelle ou quasi-tridimensionnelle.

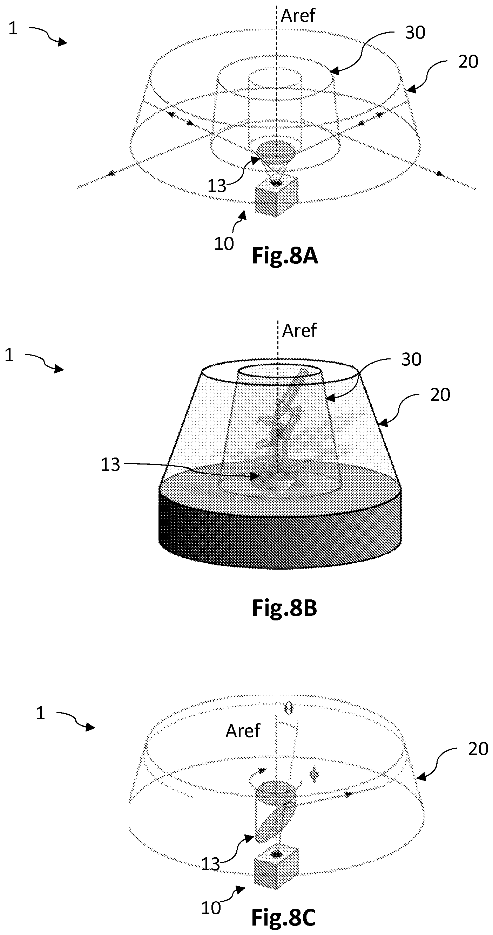

En variante, comme détaillé plus loin en référence à la figure 8C, le projecteur 10 peut comporter une seule source d'une unique image, associée à un dispositif de renvoi à balayage. La source d'image 11 est alors de préférence un pico-projecteur du type désigné dans la technique par le sigle LBS (pour *Light Beam Steering,* en anglais, c'est-à-dire faisceau lumineux dirigé), comprenant une source laser fixe associé à un miroir de renvoi mobile. Le miroir est alors mobile en rotation selon au moins deux axes, à savoir suivant un angle φ autour de l'axe de référence, et suivant un angle d'inclinaison θ par rapport à l'axe de référence, permettant de balayer l'ensemble des faces d'affichage de l'écran sur 360°.

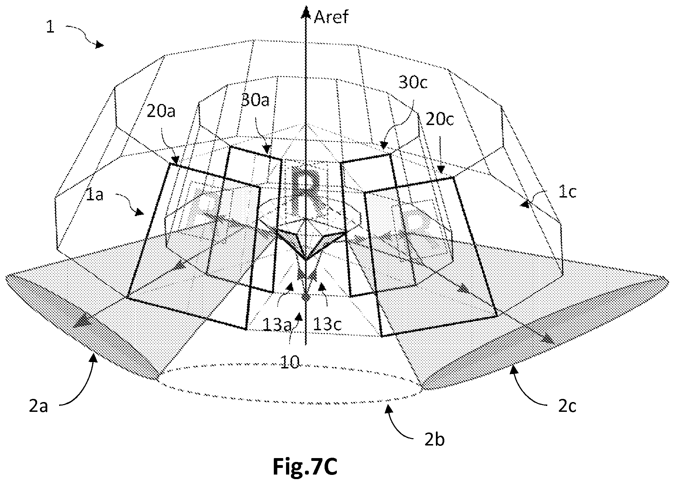

La figure 7C illustre une variante du système 1 de formation d'image flottante représenté sur la figure 7B. Dans cet exemple, chaque face d'affichage 20a, 20b, 20c est en outre adapté pour diffuser la lumière rétro-réfléchie dans un cône de diffusion 2a, 2b, 2c. L'ouverture angulaire de chaque cône de diffusion 2a, 2b, 2c peut être asymétrique, de préférence large dans un plan horizontal et étroit dans un plan vertical. Cette asymétrie de diffusion permet de privilégier la diffusion dans le plan de rotation de l'observateur, autour de l'axe de référence Aref. Les portions diffusantes et rétro-réfléchissantes 22 sont avantageusement adaptées de sorte que les cônes de diffusion 2a, 2b, 2c des faces d'affichage 20a, 20b, 20c adjacentes sont avantageusement partiellement recouvrants deux à deux, dans un plan horizontal orthogonal à l'axe Aref. Plus précisément, l'indicatrice de diffusion associée à une face d'affichage 20a est avantageusement sécante de l'indicatrice de diffusion associée à la face d'affichage 20b adjacente. Cela permet de renforcer l'aspect tridimensionnel de l'image flottante tout en préservant l'efficacité lumineuse du système.

Les figures 8A et 8B illustrent un même système 1 de formation d'image flottante selon un autre mode de réalisation, dans lequel l'écran d'affichage 20 et la structure semi-réfléchissante 30 sont courbes et coaxiales, permettant de renforcer l'impression d'observer une image flottante quasi-tridimensionnelle.

L'écran d'affichage 20 comporte une face d'affichage courbe, et forme un cône de révolution, dit externe, autour de l'axe de référence Aref. La face d'affichage correspond à la face interne 20i ou à la face externe 20e de l'écran d'affichage 20 (cf. fig.3A et suivantes). La structure semi-réfléchissante 30 comporte une face semi-réfléchissante courbe, et forme également un cône de révolution, dit interne, autour du même axe de référence Aref. L'écran d'affichage 20 et la structure semi-réfléchissante 30 s'étendent ainsi continûment autour du même axe de référence Aref, et présentent une même inclinaison l'une vers l'autre, quelle que soit la position angulaire autour de l'axe.

Le projecteur 10 comporte une source d'image (non représentée). L'image fournie est de préférence une image anamorphosée, ou anamorphose, c'est-à-dire une image déformée dans le plan de la face d'émission de la source d'image de telle sorte que la signification visuelle de l'image source n'est pas reconnaissable au niveau de la face d'émission, alors qu'elle le devient lorsqu'on observe l'image flottante correspondante.

Il comporte en outre un système optique de projection (non représenté), adapté à assurer la conjugaison optique de la source d'image et de l'écran d'affichage 20. Il comporte enfin une structure de renvoi 13 comporte une face réfléchissante, ou un ensemble de faces, à symétrie axiale autour de l'axe de référence. La face réfléchissante 13 est adaptée à réfléchir les faisceaux transmis par le système optique de projection en direction de l'écran d'affichage 20 sur 360°.

En fonctionnement, la source d'image 11 fournit une image anamorphosée qui est projetée par le système optique, et réfléchie par le miroir conique de renvoi 13, à 360°, sur l'écran d'affichage 20 conique. Cet écran 20 affiche une image réelle projetée de l'image fournie, qui reste anamorphosée. L'image réelle affichée est diffusée, et de préférence rétro-réfléchie, en direction de la structure semi-réfléchissante 30 conique, qui forme alors une image virtuelle de l'image réelle affichée. L'image virtuelle paraît donc flotter en superposition de la scène, et est observable quelle que soit la position de l'observateur autour du système 1 de formation d'affichage. L'image flottante présente alors la signification visuelle qui n'était pas repérable au niveau de l'image fournie anamorphosée. Ainsi, l'image réelle affichée n'ayant pas de signification visuelle, l'observateur est moins gêné par l'éventuelle observation de celle-ci. Son attention est alors davantage centrée sur l'image flottante.

La figure 8C illustre une variante du système 1 de formation d'image flottante illustré sur les fig. 8A et 8B, et s'en distingue essentiellement en ce que le projecteur 10 comporte, non pas une structure de renvoi fixe, c'est-à-dire immobile, mais une face de renvoi 13 mobile en rotation autour de l'axe de référence Aref.

La face de renvoi 13 est ici sensiblement plane et inclinée d'un angle θ vis-à-vis de l'axe de référence Aref de manière à orienter les faisceaux lumineux provenant de la source d'image en direction de l'écran d'affichage 20.

Ainsi, la source d'image fournit une image à projeter, anamorphosée ou non, qui est projetée par le système optique de projection sur l'écran d'affichage 20 par l'intermédiaire du miroir rotatif 13 de renvoi. Le miroir rotatif 13 de renvoi tourne à la vitesse angulaire φ(t) de sorte que l'image fournie soit projetée à 360° sur l'écran d'affichage 20. L'image réelle affichée est ensuite diffusée et de préférence rétro-réfléchie par l'écran d'affichage 20 en direction de la structure semi-réfléchissante 30 qui forme alors une image flottante.

En variante, le projecteur 10 peut comporter un dispositif de projection d'images à balayage, par exemple un vidéoprojecteur à balayage miniaturisé. Le dispositif est positionné de façon à éclairer la face rotative du miroir, de sorte que le faisceau réfléchi par le miroir éclaire la face d'affichage de l'écran. Le dispositif comprend par exemple une source laser mobile. A titre d'exemple, le dispositif est un pico-projecteur du type désigné dans la technique par le sigle LBS (pour *Light Beam Steering,* en anglais, c'est-à-dire faisceau lumineux dirigé), comprenant une source laser fixe et le miroir mobile. Le miroir est alors mobile en rotation selon au moins deux axes, suivant l'angle φ autour de l'axe de référence, et suivant l'angle θ, permettant de balayer l'ensemble de la face d'affichage de l'écran.

Des modes de réalisation particuliers viennent d'être décrits. Différentes variantes et modifications apparaîtront à l'homme du métier.

Ainsi, l'agencement en positionnement et inclinaison des éléments du système de formation d'image peut être choisi de sorte que l'observation de l'image flottante se fait suivant un axe sensiblement horizontal ou en contre-plongée. Cela permet de réduire l'inclinaison de l'écran d'affichage et de la structure semi-réfléchissante vis-à-vis de l'axe de référence.

## Revendications

1. Système de formation (1) d'une image flottante, comportant :
∘ au moins un projecteur d'image (10), adapté à projeter une image source ;
∘ un écran d'affichage (20) comportant une face interne (20i) adaptée à afficher l'image projetée par le projecteur d'image (10), ledit écran d'affichage (20) comportant des portions transparentes (21) adaptées à transmettre des faisceaux lumineux incidents sur la face interne (20i) provenant d'une scène à observer, et des portions diffusantes (22) adaptées à diffuser des faisceaux lumineux incidents sur la face interne (20i) provenant du projecteur d'image (10) et ainsi afficher l'image projetée,
∘ et ledit système (1) comportant en outre une structure semi-réfléchissante (30) disposée entre le projecteur d'image (10) et l'écran d'affichage (20), comportant une face dite de transmission (30t) adaptée à transmettre des faisceaux lumineux provenant du projecteur d'image (10) et des faisceaux lumineux provenant de la scène à observer, et une face opposée dite de réflexion (30r) adaptée à réfléchir des faisceaux lumineux provenant de l'écran d'affichage (20), de manière à former une image virtuelle, dite flottante, de l'image projetée sur l'écran d'affichage (20), ladite image flottante étant observable au travers de l'écran d'affichage (20) au moyen de la structure semi-réfléchissante (30).

2. Système (1) selon la revendication 1, dans lequel les portions diffusantes (22) dudit écran d'affichage (20) sont en outre réfléchissantes de sorte que les faisceaux lumineux provenant de la structure semi-réfléchissante (30) et diffusés par les portions diffusantes (22) sont réfléchis en direction de la structure semi-réfléchissante (30).

3. Système (1) selon la revendication 1 ou 2, dans lequel les portions diffusantes (22) dudit écran d'affichage (20) sont en outre rétro-réfléchissantes de sorte que les faisceaux lumineux provenant de la structure semi-réfléchissante (30) avec un axe d'incidence vis-à-vis des portions diffusantes (22) sont réfléchis par les portions diffusantes (22) en direction de la structure semi-réfléchissante (30) avec un axe de réflexion identique à l'axe d'incidence.

4. Système (1) selon l'une quelconque des revendications 1 à 3, dans lequel l'écran d'affichage (20) comporte une pluralité de faces d'affichage (20a, 20b) sensiblement planes et distinctes deux à deux, et dans lequel la structure semi-réfléchissante (30) comporte également une pluralité de faces (30a, 30b) sensiblement planes et inclinées deux à deux, chacune étant optiquement associée à une face d'affichage (20a, 20b).

5. Système (10) selon la revendication 4, dans lequel lesdites faces (20a, 20b ; 30a, 30b) s'étendent continûment autour d'un axe dit de référence passant par une structure de renvoi (13) dudit projecteur (10), l'écran d'affichage (20) et la structure semi-réfléchissante (30) formant chacun un cône pyramidal.

6. Système (1) selon la revendication 4 ou 5, dans lequel le projecteur (10) est adapté à fournir une pluralité d'images sources, et comporte au moins un système optique (12a, 12b) de projection adapté à conjuguer optiquement une image source à une face (20a) différente de l'écran d'affichage (20).

7. Système (1) selon l'une quelconque des revendications 4 à 6, dans lequel le projecteur (10) comporte une structure de renvoi (13) présentant une pluralité de faces réfléchissantes (13a, 13b), chacune desdites faces réfléchissantes (13a, 13b) de renvoi étant optiquement associée à une image source et à une face d'affichage (20a, 20b) .

8. Système (1) selon l'une quelconque des revendications 4 à 6, dans lequel le projecteur (10) comporte une structure de renvoi (13) présentant une face réfléchissante mobile en rotation autour d'un axe de référence (Aref) de manière à projeter une image source sur lesdites faces (20a, 20b) de l'écran d'affichage (20).

9. Système (1) selon l'une quelconque des revendications 4 à 8, dans lequel les portions diffusantes (22) desdites faces d'affichage (20a, 20b) sont :
- rétro-réfléchissantes de sorte que les faisceaux lumineux provenant de la structure semi-réfléchissante (30) avec un axe d'incidence vis-à-vis des portions diffusantes (22) sont réfléchis par les portions diffusantes (22) en direction de la structure semi-réfléchissante (30) avec un axe de réflexion identique à l'axe d'incidence, et
- adaptées à diffuser les faisceaux lumineux rétro-réfléchis dans un cône de diffusion (2a, 2b), chaque cône de diffusion (2a) associé à une face d'affichage (20a) étant partiellement recouvrant du cône de diffusion (2b) associé à une face d'affichage (20b) adjacente.

10. Système (1) selon l'une quelconque des revendications 1 à 3, dans lequel l'écran d'affichage (20) et la structure semi-réfléchissante (30) comportent chacun une unique face sensiblement courbe.

11. Système (1) selon la revendication 10, dans lequel lesdites faces courbes s'étendent continûment autour d'un axe de référence (Aref) passant par une structure de renvoi (13) dudit projecteur (10), l'écran d'affichage (20) et la structure semi-réfléchissante (30) formant chacun un cône de révolution vis-à-vis dudit axe de référence.

12. Système (1) selon la revendication 10 ou 11, dans lequel l'image fournie par la source d'image (11) est une image anamorphosée.

13. Système (1) selon l'une quelconque des revendications 1 à 12, dans lequel les portions transparentes (21) de l'écran d'affichage (20) sont adaptées à transmettre des faisceaux lumineux provenant de la structure semi-réfléchissante (30), et dans lequel les portions diffusantes (22) sont adaptées à diffuser des faisceaux lumineux provenant de la structure semi-réfléchissante (30) en direction de ladite structure semi-réfléchissante (30).

14. Système (1) selon l'une quelconque des revendications 1 à 13, dans lequel chaque portion diffusante (22) est entourée d'une portion transparente (21), et dans lequel l'écran d'affichage (20) présente un taux d'occultation par les portions diffusantes (22) inférieur ou égal à 20%.

15. Système (1) selon l'une quelconque des revendications 1 à 14, dans lequel le projecteur d'image (10) comporte au moins une structure de renvoi (13) adaptée à réfléchir au moins partiellement les faisceaux lumineux provenant d'une source d'image (11) en direction de l'écran d'affichage (20), ladite structure semi-réfléchissante (30) étant disposée entre l'écran d'affichage (20) et la structure de renvoi (13).

## Patentansprüche

1. System zum Herstellen (1) eines schwebenden Bildes, das Folgendes aufweist:
∘ mindestens einen Bildprojektor (10), ausgebildet zum Projizieren eines Quellbildes;
∘ einen Anzeigebildschirm (20) mit einer Innenfläche (20i), ausgebildet zum Anzeigen des vom Bildprojektor (10) projizierten Bildes;
wobei der Anzeigebildschirm (20) transparente Bereiche (21) aufweist, die dazu ausgebildet sind, einfallende Lichtstrahlen, die von einer zu beobachtenden Szene kommen, auf die Innenfläche (20i) zu übertragen, und diffuse Bereiche (22), die dazu ausgebildet sind, einfallende Lichtstrahlen, die vom Bildprojektor (10) kommen, auf die Innenfläche (20i) zu streuen und somit das projizierte Bild anzuzeigen,
∘ und wobei das System (1) darüber hinaus eine halbreflektierende Struktur (30) aufweist, die zwischen dem Bildprojektor (10) und dem Anzeigebildschirm (20) angeordnet ist und eine als Übertragungsfläche (30t) bezeichnete Fläche aufweist, die ausgebildet ist, um Lichtstrahlen, die vom Bildprojektor (10) kommen und Lichtstrahlen, die von der zu beobachtenden Szene kommen, zu übertragen, und eine als Reflexionsfläche (30r) bezeichnete gegenüberliegende Fläche, die ausgebildet ist, um Lichtstrahlen, die vom Anzeigebildschirm (20) kommen, so zu reflektieren, dass ein virtuelles Bild, das als schwebend bezeichnet wird, des auf den Anzeigebildschirm (20) projizierten Bildes gebildet wird, wobei das schwebende Bild mithilfe der halbreflektierenden Struktur (30) durch den Anzeigebildschirm (20) hindurch betrachtet werden kann.

2. System (1) nach Anspruch 1, wobei die diffusen Bereiche (22) des Anzeigebildschirms (20) darüber hinaus in der Art reflektierend sind, dass die Lichtstrahlen, die von der halbreflektierenden Struktur (30) kommen und von den diffusen Bereichen (22) gestreut werden, in Richtung der halbreflektierenden Struktur (30) reflektiert werden.

3. System (1) nach Anspruch 1 oder 2, wobei die diffusen Bereiche (22) des Anzeigebildschirms (20) darüber hinaus in der Art retroreflektierend sind, dass die Lichtstrahlen, die von der halbreflektierenden Struktur (30) mit einer Einfallsachse gegenüber den diffusen Bereichen (22) kommen, von den diffusen Bereichen (22) in Richtung der halbreflektierenden Struktur (30) mit einer Reflexionsachse identisch zur Einfallsachse reflektiert werden.

4. System (1) nach einem der Ansprüche 1 bis 3, wobei der Anzeigebildschirm (20) eine Vielzahl von Anzeigeflächen (20a, 20b) aufweist, die im Wesentlichen eben und paarweise unterschiedlich sind, und wobei die halbreflektierende Struktur (30) darüber hinaus eine Vielzahl von Flächen (30a, 30b) aufweist, die im Wesentlichen eben und paarweise geneigt sind, wobei jede Fläche optisch einer Anzeigefläche (20a, 20b) zugeordnet ist.

5. System (10) nach Anspruch 4, wobei sich die Flächen (20a, 20b; 30a, 30b) kontinuierlich um eine als Referenzachse bezeichnete Achse erstrecken, die durch eine Ablenkstruktur (13) des Projektors (10) verläuft, wobei der Anzeigebildschirm (20) und die halbreflektierende Struktur (30) jeweils einen Pyramidenkegel bilden.

6. System (1) nach Anspruch 4 oder 5, wobei der Projektor (10) dazu ausgebildet ist, eine Vielzahl von Quellbildern bereitzustellen, und mindestens ein optisches Projektionssystem (12a, 12b) aufweist, das dazu ausgebildet ist, ein Quellbild optisch an eine Fläche (20a) zu koppeln, die sich vom Anzeigebildschirm (20) unterscheidet.

7. System (1) nach einem der Ansprüche 4 bis 6, wobei der Projektor (10) eine Ablenkstruktur (13) mit einer Vielzahl von reflektierenden Flächen (13a, 13b) aufweist, wobei jede der reflektierenden Flächen (13a, 13b) der Ablenkung optisch einem Quellbild und einer Anzeigefläche (20a, 20b) zugeordnet ist.

8. System (1) nach einem der Ansprüche 4 bis 6, wobei der Projektor (10) eine Ablenkstruktur (13) mit einer reflektierenden Fläche aufweist, die sich in Rotation um eine Referenzachse (Aref) bewegen kann, um ein Quellbild auf die Flächen (20a, 20b) des Anzeigebildschirms (20) zu projizieren.

9. System (1) nach einem der Ansprüche 4 bis 8, wobei die diffusen Bereiche (22) der Anzeigeflächen (20a, 20b) Folgendes sind:
- retroreflektierend in der Art, dass die Lichtstrahlen, die von der halbreflektierenden Struktur (30) mit einer Einfallsachse gegenüber den diffusen Bereichen (22) kommen, von den diffusen Bereichen (22) in Richtung der halbreflektierenden Struktur (30) mit einer Reflexionsachse identisch zur Einfallsachse reflektiert werden, und
- ausgebildet, um die retroreflektierten Lichtstrahlen in einen Diffusionskegel (2a, 2b) zu streuen, wobei jeder Diffusionskegel (2a), der einer Anzeigefläche (20a) zugeordnet ist, den Diffusionskegel (2b), der einer benachbarten Anzeigefläche (20b) zugeordnet ist, teilweise bedeckt.

10. System (1) nach einem der Ansprüche 1 bis 3, wobei der Anzeigebildschirm (20) und die halbreflektierende Struktur (30) jeweils eine einzige im Wesentlichen gekrümmte Fläche aufweisen.

11. System (1) nach Anspruch 10, wobei sich die gekrümmten Flächen kontinuierlich um eine Referenzachse (Aref) erstrecken, die durch eine Ablenkstruktur (13) des Projektors (10) verläuft, wobei der Anzeigebildschirm (20) und die halbreflektierende Struktur (30) jeweils einen Rotationskegel gegenüber der Referenzachse bilden.

12. System (1) nach Anspruch 10 oder 11, wobei das von der Bildquelle (11) bereitgestellte Bild ein anamorphes Bild ist.

13. System (1) nach einem der Ansprüche 1 bis 12, wobei die transparenten Bereiche (21) des Anzeigebildschirms (20) ausgebildet sind, Lichtstrahlen zu übertragen, die von der halbreflektierenden Struktur (30) kommen, und wobei die diffusen Bereiche (22) ausgebildet sind, Lichtstrahlen, die von der halbreflektierenden Struktur (30) kommen, in Richtung der halbreflektierenden Struktur (30) zu streuen.

14. System (1) nach einem der Ansprüche 1 bis 13, wobei jeder diffuse Bereich (22) von einem transparenten Bereich (21) umgeben ist und wobei der Anzeigebildschirm (20) einen durch den diffusen Bereich (22) bedingten Verdeckungsgrad kleiner oder gleich 20 % aufweist.

15. System (1) nach einem der Ansprüche 1 bis 14, wobei der Bildprojektor (10) mindestens eine Ablenkstruktur (13) aufweist, die ausgebildet ist, mindestens teilweise die Lichtstrahlen, die von der Bildquelle (11) kommen, in Richtung des Anzeigebildschirms (20) zu reflektieren, wobei die halbreflektierende Struktur (30) zwischen dem Anzeigebildschirm (20) und der Ablenkstruktur (13) angeordnet ist.

## Claims

1. System (1) for forming a floating image, comprising:
- at least one image projector (10) suitable for projecting a source image;
- a display screen (20) comprising an internal face (20i) suitable for displaying the image projected by the image projector (10);
said display screen (20) comprising transparent segments (21) suitable for transmitting light beams incident on the internal face (20i) coming from a scene to be observed, and scattering segments (22) suitable for scattering light beams incident on the internal face (20i) coming from the image projector (10) and thus for displaying the projected image,
- and said system (1) furthermore comprising a semi-reflective structure (30) placed between the image projector (10) and the display screen (20), comprising a face (30t), termed the transmission face, suitable for transmitting light beams coming from the image projector (10) and light beams coming from the scene to be observed, and an opposite face (30r), termed the reflection face, suitable for reflecting light beams coming from the display screen (20), so as to form a virtual image, termed the floating image, of the image projected on the display screen (20), said floating image being observable through the display screen (20) by means of the semi-reflective structure (30).

2. System (1) according to Claim 1, wherein the scattering segments (22) of said display screen (20) are furthermore reflective so that the light beams coming from the semi-reflective structure (30) and scattered by the scattering segments (22) are reflected in the direction of the semi-reflective structure (30).

3. System (1) according to Claim 1 or 2, wherein the scattering segments (22) of said display screen (20) are furthermore retroreflective so that the light beams coming from the semi-reflective structure (30) with an axis of incidence with respect to the scattering segments (22) are reflected by the scattering segments (22) in the direction of the semi-reflective structure (30) with an axis of reflection identical to the axis of incidence.

4. System (1) according to any one of Claims 1 to 3, wherein the display screen (20) comprises a plurality of display faces (20a, 20b) that are substantially planar and distinct pairwise, and wherein the semi-reflective structure (30) also comprises a plurality of faces (30a, 30b) that are substantially planar and inclined pairwise, each being optically associated with one display face (20a, 20b).

5. System (10) according to Claim 4, wherein said faces (20a, 20b; 30a, 30b) extend continuously about an axis, termed the reference axis, passing through a steering structure (13) of said projector (10), the display screen (20) and the semi-reflective structure (30) each forming a pyramidal cone.

6. System (1) according to Claim 4 or 5, wherein the projector (10) is suitable for delivering a plurality of source images, and comprises at least one projecting optical system (12a, 12b) suitable for optically conjugating a source image with a different face (20a) of the display screen (20).

7. System (1) according to any one of Claims 4 to 6, wherein the projector (10) comprises a steering structure (13) having a plurality of reflective faces (13a, 13b), each of said steering reflective faces (13a, 13b) being optically associated with a source image and with a display face (20a, 20b).

8. System (1) according to any one of Claims 4 to 6, wherein the projector (10) comprises a steering structure (13) having a reflective face that is able to rotate about a reference axis (Aref) so as to project a source image onto said faces (20a, 20b) of the display screen (20).

9. System (1) according to any one of Claims 4 to 8, wherein the scattering segments (22) of said display faces (20a, 20b) are:
- retroreflective so that the light beams coming from the semi-reflective structure (30) with an axis of incidence with respect to the scattering segments (22) are reflected by the scattering segments (22) in the direction of the semi-reflective structure (30) with an axis of reflection identical to the axis of incidence, and
- suitable for scattering the retroreflected light beams in a scattering cone (2a, 2b), each scattering cone (2a) associated with one display face (20a) partially overlapping the scattering cone (2b) associated with an adjacent display face (20b).

10. System (1) according to any one of Claims 1 to 3, wherein the display screen (20) and the semi-reflective structure (30) each comprise a single substantially curved face.

11. System (1) according to Claim 10, wherein said curved faces extend continuously about a reference axis (Aref) passing through a steering structure (13) of said projector (10), the display screen (20) and the semi-reflective structure (30) each forming a cone of revolution with respect to said reference axis.

12. System (1) according to Claim 10 or 11, wherein the image delivered by the image source (11) is an anamorphic image.

13. System (1) according to any one of Claims 1 to 12, wherein the transparent segments (21) of the display screen (20) are suitable for transmitting light beams coming from the semi-reflective structure (30), and wherein the scattering segments (22) are suitable for scattering light beams coming from the semi-reflective structure (30) in the direction of said semi-reflective structure (30).

14. System (1) according to any one of Claims 1 to 13, wherein each scattering segment (22) is encircled by a transparent segment (21), and wherein the display screen (20) has a degree of occultation by the scattering segments (22) lower than or equal to 20%.

15. System (1) according to any one of Claims 1 to 14, wherein the image projector (10) comprises at least one steering structure (13) suitable for reflecting at least partially the light beams coming from an image source (11) in the direction of the display screen (20), said semi-reflective structure (30) being placed between the display screen (20) and the steering structure (13)
